# DEMANDE DE BREVET EUROPEEN

(11) **EP 1 462 581 A1**
(43) Date de publication de la demande: **29.09.2004**
(21) Numéro de dépôt: 04290534.9
(22) Date de dépôt: 27.02.2004
(51) Int. Cl.: E03C 1/02

(54) **Installation sanitaire pour la distribution d'eau en particulier dans une habitation et ensemble de nourrices**

(30) Priorité: 25.03.2003 FR 0303649
(71) Demandeur: Gripp, 38180 Seyssins (FR)
(72) Inventeur: Menet, Georges, 73800 Les Marches (FR)
(74) Mandataire: Casalonga, Axel

(57) **Abrégé**

Installation sanitaire et ensemble de nourrice pour la distribution d'eau en particulier dans une habitation
Est prévue une nourrice principale (9) qui comprend un moyen principal (12) de connexion de conduit, des moyens primaires (13) de connexion de conduits et au moins un moyen secondaire (15) de connexion de conduit.
Est prévue au moins une nourrice secondaire (10a, 10b, 10c) qui comprend des moyens primaires (17) de connexion de conduits et au moins un moyen secondaire (19) de connexion de conduit.
Une multiplicité de conduits relie lesdits moyens de connexon de conduits de la nourrice principale (9), au moins une nourrice secondaire (10a ; 10b) et au moins un appareil (3) de l'installation.
Lesdits moyens primaires (13, 17) de la nourrice principale (9) et d'au moins une nourrice secondaire (10) sont identiques et lesdits moyens secondaires (15, 19) de la nourrice principale (9) et d'au moins une nourrice secondaire (10) sont identiques.

## Description

La présente invention concerne le domaine des installations sanitaires pour la distribution d'eau en particulier dans une habitation.

Actuellement, les installations sanitaires pour la distribution d'eau froide et d'eau chaude vers des appareils domestiques tels que des lavabos, des éviers, des baignoires, des machines à laver, des chauffe-eau, comprennent des conduits de grandes longueurs, encastrés ou non, rayonnants à partir d'un point central d'eau froide et d'un point central d'eau chaude.

Le but de la présente invention est de proposer une installation sanitaire dont les éléments constitutifs sont adaptés pour notamment faciliter et réduire le coût de sa mise en place.

L'installation sanitaire pour la distribution d'eau en particulier dans une habitation, selon un objet de l'invention comprend :
- une nourrice principale qui comprend un moyen principal de connexion de conduit, des moyens primaires de connexion de conduits et au moins un moyen secondaire de connexion de conduit ;
- au moins une nourrice secondaire qui comprend des moyens primaires de connexion de conduits et au moins un moyen secondaire de connexion de conduit ;
- et une multiplicité de conduits qui comprend au moins : un conduit principal d'arrivée d'eau branché sur le moyen principal de connexion de conduit de la nourrice principale, des conduits primaires dont l'un relie l'un des moyens primaires de connexion de conduits de la nourrice principale à l'un desdits moyens primaires de connexion de conduits d'une nourrice secondaire et dont les autres relient respectivement au moins certains des autres moyens primaires de connexion de conduits de la nourrice principale et d'une nourrice secondaire à au moins un appareil de l'installation ou à un moyen secondaire de connexion de conduit d'un autre nourrice secondaire, et des conduits secondaires reliant respectivement les moyens secondaires de connexion de conduits de la nourrice principale et d'au moins une nourrice secondaire à au moins un appareil de l'installation ;
- lesdits moyens primaires de connexion de conduits de la nourrice principale et d'au moins une nourrice secondaire étant identiques et lesdits moyens secondaires de connexion de conduits de la nourrice principale et d'au moins une nourrice secondaire étant identiques.

Selon l'invention, l'un des moyens primaires de connexion de conduits de la nourrice principale peut avantageusement être relié à l'un desdits moyens primaires de connexion de conduits d'une nourrice secondaire via un moyen de chauffage d'eau.

Selon l'invention, l'installation peut avantageusement comprendre plusieurs nourrices secondaires identiques.

Selon l'invention, la nourrice principale comprend de préférence un corps creux longitudinal, son moyen principal de connexion de conduit et ses moyens primaires de connexion de conduits étant prévus latéralement audit corps et étant alignés longitudinalement et son moyen secondaire de connexion étant placé latéralement audit corps, à l'opposé de ses moyens principal et primaires de connexion de conduits.

Selon l'invention, la nourrice principale comprend de préférence un moyen de connexion primaire de conduit placé à l'une des extrémités de son corps précité.

Selon l'invention, la nourrice secondaire comprend de préférence un corps creux longitudinal, ses moyens primaires de connexion de conduits étant prévus latéralement audit corps et étant alignés longitudinalement et son moyen secondaire de connexion de conduit étant placé latéralement audit corps, à l'opposé de ses moyens primaires.

Selon l'invention, la nourrice secondaire comprend de préférence un moyen primaire de connexion de conduit placé à l'une des extrémités de son corps précité.

Selon l'invention, lesdits moyens de connexion de conduits sont de préférence constitués par des embouts en saillie à filetage extérieur.

La présente invention a également pour objet un ensemble de nourrices pour la distribution d'eau dans une installation sanitaire.

Cet ensemble comprend au moins une nourrice principale comprenant un corps creux longitudinal, un moyen principal de connexion de conduit , des moyens primaires de connexion de conduits et au moins un moyen secondaire de connexion de conduit, ledit moyen principal de connexion de conduit et lesdits moyens primaires de connexion de conduits étant prévus latéralement audit corps et alignés longitudinalement et ledit moyen secondaire de connexion de conduit étant placé latéralement audit corps à l'opposé desdits moyens principal et primaires.

Ledit ensemble comprend également au moins une nourrice secondaire comprenant des moyens primaires de connexion de conduits prévus latéralement audit corps et alignés longitudinalement et au moins un moyen secondaire de connexion de conduit prévus latéralement audit corps à l'opposé desdits moyens primaires de connexion de conduits ;.lesdits moyens primaires de connexion de conduits de ladite nourrice principale et de ladite nourrice secondaire étant identiques et lesdits moyens secondaires de connexion de conduits de ladite nourrice principale et de ladite nourrice secondaire étant identiques.

Selon l'invention, la nourrice principale dudit ensemble comprend de préférence un moyen primaire de connexion de conduit placé à l'une des extrémités de son corps précité.

Selon l'invention, la nourrice secondaire dudit ensemble comprend de préférence un moyen primaire de connexion de conduit placé à l'une des extrémités de son corps précité.

Selon l'invention, lesdits moyens de connexion de conduits sont de préférence constitués par des embouts en saillie à filetage extérieur.

La présente invention sera mieux comprise à l'étude d'une installation sanitaire pour la distribution d'eau froide et d'eau chaude dans une habitation, décrite à titre d'exemple non limitatif et illustré par le dessin sur lequel :
- la figure 1 représente une vue en perspective d'une installation sanitaire selon la présente invention ;
- la figure 2 représente une vue de côté d'un élément constitutif de ladite installation ;
- et la figure 3 représente une vue de côté d'un autre élément constitutif de ladite installation.

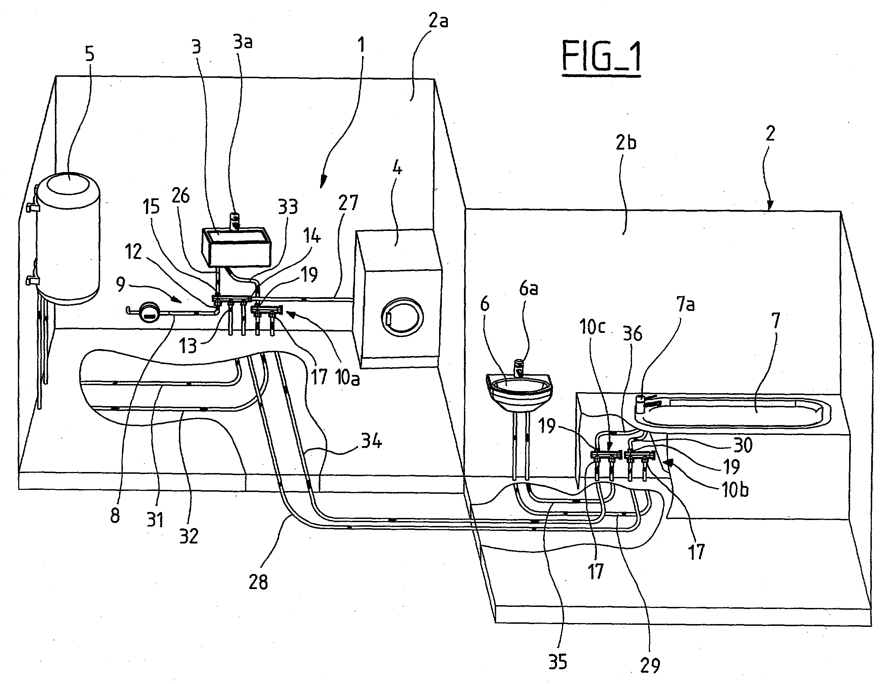

L'installation sanitaire 1 représentée sur la figure 1 est destinée à réaliser la distribution d'eau dans une habitation 2 présentant, dans une pièce 2a, un évier 3, une machine à laver 4, un chauffe-eau 5 placé en hauteur, et dans une autre pièce 2b, un lavabo 6 et une baignoire 7, cette habitation présentant un conduit d'arrivée d'eau froide 8 sortant de la partie inférieure d'une paroi de la première pièce 2a de l'habitation 2.

L'installation sanitaire 1 est construite autour d'une nourrice principale 9 et de nourrices secondaires 10.

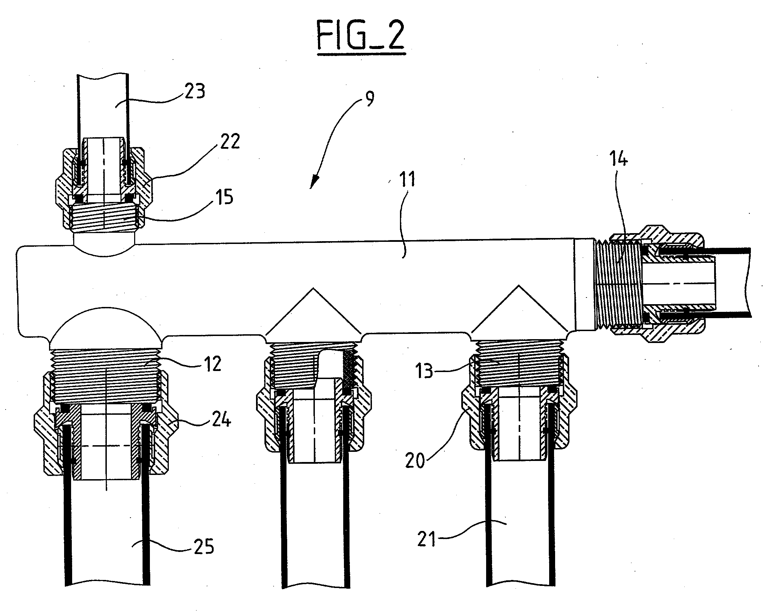

Comme le montre la figure 2, la nourrice principale 9, réalisée de façon monobloc, comprend un corps creux longitudinal cylindrique 11 qui est muni latéralement d'un embout principal 12 de connexion de conduit et de deux embouts primaires 13 de connexion de conduits, qui sont alignés longitudinalement au corps 11 et espacés, d'un autre embout primaire 14 de connexion de conduit prévu à l'une des extrémités longitudinales du corps 11, ainsi que d'un embout secondaire 15 de connexion de conduit prévu latéralement au corps 11 et opposé à l'embout principal 12.

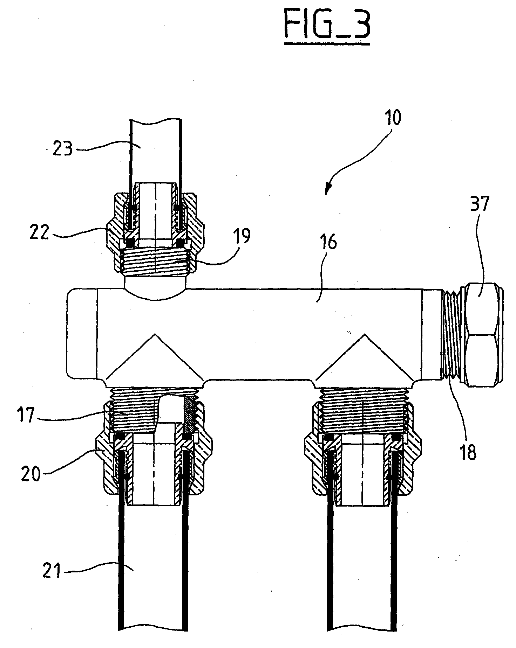

Comme le montre la figure 3, la nourrice secondaire 10, réalisée de façon monobloc, comprend un corps creux longitudinal cylindrique 16 qui est muni latéralement de deux embouts primaires 17 de connexion de conduits, qui sont alignés longitudinalement au corps 16 et espacés, d'un autre embout primaire 18 de connexion de conduit prévu à l'une des extrémités longitudinales du corps 16, ainsi que d'un embout secondaire 19 de connexion de conduit prévu latéralement au corps 16 et opposé à l'un des embouts primaires 17.

Les embouts primaires 13 et 14 de la nourrice principale 11 et les embouts primaires 17 et 18 de la nourrice secondaire 10 sont identiques. Ils présentent à cet effet des filetages extérieurs de même pas et de même diamètre et constituent des moyens de connexion mâles adaptés pour recevoir des écrous filetés intérieurement 20 pour l'accouplement et le branchement de façon étanche d'une extrémité de conduit 21.

L'embout secondaire 15 de la nourrice principale 9 et l'embout secondaire 19 de la nourrice secondaire 10 sont identiques. Ils présentent à cet effet des filetages extérieurs de pas et de diamètre identiques et constituent des moyens de connexion mâles adaptés pour recevoir des écrous filetés intérieurement 22 pour l'accouplement et le branchement de façon étanche d'une extrémité de conduits 23.

L'embout principal 12 de la nourrice principale 9 présente un filetage extérieur adapté pour recevoir un écrou 24 pour l'accouplement et le branchement de façon étanche de l'extémité d'un conduit 26.

Dans un exemple de réalisation, l'embout principal 12 de la nourrice principale 11 peut être un embout de 3/4 de pouce, les embouts primaires 13 et 14 de la nourrice principale 11 et les embouts primaires 17 et 18 de la nourrice secondaire 10 peuvent être des embouts de 1/2 pouce et l'embout secondaire 15 de la nourrice principale 9 et l'embout secondaire 19 de la nourrice secondaire 10 peuvent être des embouts de 3/8 de pouce, les dimensions ci-dessus étant exprimées conformément aux habitudes dans le métier de la plomberie.

En revenant à nouveau à la figure 1, on va maintenant décrire la constitution et le branchement de l'installation sanitaire 1.

La nourrice principale 9 est placée en-dessous de l'évier 3 de façon que son corps 11 s'étende horizontalement, parallèlement à la paroi correspondante de l'habitation 2, ces embouts latéraux principal et primaires 13 et 14 étant orientés vers le bas et son embout secondaire 15 étant orienté vers le haut.

L'installation sanitaire 1 comprend une premiere nourrice secondaire 10a placée à proximité de la nourrice principale 9, en-dessous de l'évier 3, et disposée de telle sorte que son corps 16 s'étende horizontalement, parallèlement à la paroi correspondante de l'habitation 2, et que ses embouts primaires latéraux 17 soient orientés vers le bas et son embout secondaire latéral 19 soit orienté vers le haut.

A proximité du lavabo 6 et de la baignoire 7, l'installation sanitaire 1 comprend deux nourrices secondaires 10b et 10c qui sont disposées à proximité l'un de l'autre, de telle sorte que leur corps 16 s'étende horizontalement, parallèlement à la paroi correspondante de l'habitation 2, leurs embouts primaires latéraux 17 étant orientés vers le bas et leurs embouts secondaires latéraux 19 étant orientés vers le haut.

La distribution d'eau froide de l'installation sanitaire 1 est formée de la manière suivante.

L'embout secondaire latéral 15 de la nourrice principale 11 est relié à la robinetterie 3a de l'évier 3 par un conduit 26, par exemple flexible.

L'embout d'extrémité 14 de la nourrice principale 11 est relié à la machine à laver 4 par un conduit 27.

L'un des embouts primaires latéraux 13 de la nourrice principale 11 est relié à l'un des embouts primaires latéraux 17 de la nourrice secondaire 10b par un conduit 28.

L'autre embout primaire latéral 17 de la nourrice secondaire 10b est relié à la robinetterie 6a du lavabo par un conduit 29.

L'embout secondaire latéral 19 de la nourrice secondaire 10b est relié à la robinetterie 7a de la baignoire 7 par un conduit 30, par exemple flexible.

Pour la distribution d'eau chaude, l'installation sanitaire 1 est formée de la manière suivante.

L'autre embout primaire latéral 13 de la nourrice principale 9 est relié à l'entrée d'eau froide du chauffe-eau 5 par l'intermédiaire d'un conduit 31.

La sortie d'eau chaude du chauffe-eau 5 est reliée à l'un des embouts primaires latéraux 17 de la nourrice secondaire 10a par l'intermédiaire d'un conduit 32.

L'embout secondaire latéral 19 de la nourrice secondaire 10a est relié à la robinetterie 3a de l'évier 3 par un conduit 33.

L'autre embout primaire latéral 17 de la nourrice secondaire 10a est relié à l'un des embouts primaires latéraux 17 de la nourrice secondaire 10c par l'intermédiaire d'un conduit 34.

L'autre embout primaire latéral 17 de la nourrice secondaire 10c est relié à la robinetterie 6a de l'évier 6 par un conduit 35.

L'embout secondaire latéral 19 de la nourrice secondaire 10c est relié à la robinetterie 7a de la baignoire 7 par un conduit 36, par exemple flexible.

Dans cet exemple, les embouts primaires d'extrémité 18 des nourrices secondaires 10a, 10b et 10c ne sont pas utilisés et sont en attente. Pour cela, on les munit d'écrous borgnes 37 constituant des bouchons.

Dans l'exemple représenté, les conduits 28, 29, 31, 32, 34 et 35 sont partiellement encastrés dans le sol de l'habitation 2, seules leurs extrémités dépassant verticalement vers le haut.

Aussi, pour la mise en place de l'installation 1, on dispose les conduits ci-dessus en les ayant formés, puis on les noye lors du coulage de la dalle de l'habitation 2 en laissant dépasser vers le haut leurs extrémités.

Ensuite, on branche sur ces conduits encastrés la nourrice principale 9 et les nourrices secondaires 10a, 10b et 10c comme décrit précédemment.

Puis, on forme et on branche les autres conduits 8, 26, 27, 30 et 36 comme décrit précédemment et on branche les conduits 29 et 35.

La présente invention ne se limite pas l'exemple décrit ci-dessus. On peut en effet réaliser, autour d'une nourrice principale et de nourrices secondaires, identiques ou équivalentes à celles décrites plus haut, des installations très différentes de l'installation 1 décrite ci-dessus, dont les conduits de liaison et leur agencement seraient adaptés aux appareils à alimenter en eau froide et/ou chaude et au nombre de ces appareils, sans pour autant sortir du cadre défini par les revendications annexées.

## Revendications

1. Installation sanitaire pour la distribution d'eau en particulier dans une habitation, **caractérisée par le fait qu'**elle comprend :
- une nourrice principale (9) qui comprend un moyen principal (12) de connexion de conduit, des moyens primaires (13) de connexion de conduits et au moins un moyen secondaire (15) de connexion de conduit ;
- au moins une nourrice secondaire (10) qui comprend des moyens primaires (17) de connexion de conduits et au moins un moyen secondaire (19) de connexion de conduit ;
- et une multiplicité de conduits qui comprend au moins :
un conduit principal (8) d'arrivée d'eau branché sur le moyen principal (12) de connexion de conduit de la nourrice principale (9),
des conduits primaires dont l'un (28 ; 31, 32) relie l'un des moyens primaires (13) de connexion de conduits de la nourrice principale (9) à l'un desdits moyens primaires (17) de connexion de conduits d'une nourrice secondaire (10b ; 10a) et dont les autres (27, 34) relient respectivement au moins certains des autres moyens primaires (13, 17) de connexion de conduits de la nourrice principale (9) et d'une nourrice secondaire (10) à au moins un appareil de l'installation ou à un moyen secondaire (10c) de connexion de conduit d'un autre nourrice secondaire,
et des conduits secondaires (26, 33) reliant respectivement les moyens secondaires (15, 19) de connexion de conduits de la nourrice principale (9) et d'au moins une nourrice secondaire (10a) à au moins un appareil (3) de l'installation ;
- lesdits moyens primaires (13, 17) de connexion de conduits de la nourrice principale (9) et d'au moins une nourrice secondaire (10) étant identiques et lesdits moyens secondaires (15, 19) de connexion de conduits de la nourrice principale (9) et d'au moins une nourrice secondaire (10) étant identiques.

2. Installation selon la revendication 1, **caractérisée par le fait que** l'un des moyens primaires de connexion de conduits de la nourrice principale (9) est relié à l'un desdits moyens primaires (17) de connexion de conduits d'une nourrice secondaire (10a) via un moyen de chauffage d'eau (5).

3. Installation selon l'une des revendications 1 et 2, **caractérisée par le fait qu'**elle comprend plusieurs nourrices secondaires identiques (10a, 10b, 10c).

4. Installation selon l'une quelconque des revendications précédentes, **caractérisée par le fait que** la nourrice principale (9) comprend un corps creux longitudinal (11), son moyen principal (12) de connexion de conduit et ses moyens primaires (13) de connexion de conduits étant prévus latéralement audit corps et étant alignés longitudinalement et son moyen secondaire (15) de connexion de conduit étant placé latéralement audit corps, à l'opposé de ses moyens principal et primaires de connexion de conduits.

5. Installation selon la revendication 4, **caractérisée par le fait que** la nourrice principale comprend un moyen primaire (14) de connexion de conduit placé à l'une des extrémités de son corps précité.

6. Installation selon l'une quelconque des revendications précédentes, **caractérisée par le fait que** la nourrice secondaire (10) comprend un corps creux longitudinal (16), ses moyens primaires (17) de connexion de conduits étant prévus latéralement audit corps et étant alignés longitudinalement et son moyen secondaire (19) de connexion de conduit étant placé latéralement audit corps à l'opposé de ses moyens primaires (17) de connexion de conduits.

7. Installation selon la revendication 6, **caractérisée par le fait que** la nourrice secondaire (10) comprend un moyen primaire (18) de connexion de conduit placé à l'une des extrémité de son corps précit

8. Installation selon l'une quelconque des revendications précédentes, **caractérisée par le fait que** lesdits moyens de connexion de conduits sont constitués par des embouts en saillie (12, 13, 14, 15, 17, 18, 19) à filetage extérieur.

9. Ensemble de nourrices pour la distribution d'eau dans une installation sanitaire, **caractérisé par le fait qu'**il comprend au moins une nourrice principale (9) comprenant un corps creux longitudinal (11), un moyen principal (2) de connexion de conduit , des moyens primaires (13) de connexion de conduits et au moins un moyen secondaire (15) de connexion de conduit, ledit moyen principal (2) de connexion de conduit et lesdits moyens primaires (13) de connexion de conduits étant prévus latéralement audit corps et alignés longitudinalement et ledit moyen secondaire (15) de connexion de conduit étant placé latéralement audit corps à l'opposé desdits moyens principal et primaires ; et qu'il comprend au moins une nourrice secondaire (10) comprenant des moyens primaires (17) de connexion de conduits prévus latéralement audit corps et alignés longitudinalement et au moins un moyen secondaire (19) de connexion de conduit prévus latéralement audit corps à l'opposé desdits moyens primaires de connexion de conduits ;. lesdits moyens primaires (13, 17) de connexion de conduits de ladite nourrice principale (9) et de ladite nourrice secondaire (20) étant identiques et lesdits moyens secondaires (15, 19) de connexion de conduits de ladite nourrice principale (9) et de ladite nourrice secondaire (20) étant identiques.

10. Ensemble de nourrices selon la revendication 9, **caractérisé par le fait que** la nourrice principale (9) comprend un moyen primaire (14) de connexion de conduit placé à l'une des extrémités de son corps précité.

11. Ensemble de nourrices selon la revendication 9, **caractérisé par le fait que** la nourrice secondaire (10) comprend un moyen primaire (18) de connexion de conduit placé à l'une des extrémités de son corps précité.

12. Ensemble de nourrices selon l'une quelconque des revendications 9 à 11, **caractérisé par le fait que** lesdits moyens (12, 13, 14, 15, 17, 18, 19) de connexion de conduits sont constitués par des embouts en saillie à filetage extérieur.
